(19) Europäisches Patentamt / European Patent Office / Office européen des brevets

(11) **EP 3 914 993 B1**

(12) **FASCICULE DE BREVET EUROPEEN**

(45) Date de publication et mention
de la délivrance du brevet:
**06.03.2024  Bulletin 2024/10**

(21) Numéro de dépôt: **20700727.9**

(22) Date de dépôt: **20.01.2020**

(51) Classification Internationale des Brevets (IPC):
**G06F 3/01** *(2006.01)*          **G06F 3/0488** *(2022.01)*
**G06F 3/0354** *(2013.01)*

(52) Classification Coopérative des Brevets (CPC):
**G06F 3/016; G06F 3/03547; G06F 3/0488**

(86) Numéro de dépôt international:
**PCT/EP2020/051266**

(87) Numéro de publication internationale:
**WO 2020/152096 (30.07.2020 Gazette 2020/31)**

(54) **PROCÉDÉ DE GÉNÉRATION DE SENSATIONS TACTILES ET INTERFACE HAPTIQUE METTANT EN OEUVRE CE PROCÉDÉ**

VERFAHREN ZUR ERZEUGUNG VON TAKTILEN EMPFINDUNGEN UND HAPTISCHE SCHNITTSTELLE ZUR DURCHFÜHRUNG DES VERFAHRENS

METHOD FOR GENERATING TACTILE SENSATIONS AND HAPTIC INTERFACE IMPLEMENTING SAID METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.01.2019  FR 1900554**

(43) Date de publication de la demande:
**01.12.2021  Bulletin 2021/48**

(73) Titulaire: **Actronika**
**75017 Paris (FR)**

(72) Inventeurs:
• **HAYWARD, Vincent**
**75013 Paris (FR)**
• **CHEYNET, Jérémy**
**93250 Villemomble (FR)**

(74) Mandataire: **Cabinet Camus Lebkiri**
**25 rue de Maubeuge**
**75009 Paris (FR)**

(56) Documents cités:
**EP-A2- 2 244 168          US-A1- 2002 033 795
US-A1- 2017 329 408**

## Description

### DOMAINE TECHNIQUE DE l'INVENTION

La présente invention concerne un procédé pour générer des sensations tactiles destinées à être ressenties par l'utilisateur d'une interface haptique. L'invention concerne également l'interface haptique mettant en oeuvre ce procédé. L'invention trouve des applications dans les domaines de l'haptique pour procurer des sensations tactiles aux utilisateurs d'interfaces haptiques et, en particulier, dans les domaines où une interface haptique peut être partagée entre plusieurs utilisateurs, comme par exemple les interfaces des véhicules automobiles ou les interfaces collaboratives.

### ARRIERE-PLAN TECHNOLOGIQUE DE L'INVENTION

Il est connu, dans le domaine haptique, de chercher à produire ou reproduire, au moyen d'une machine, les sensations du toucher ressenties par une personne.

Il est connu, en particulier, de procurer des sensations tactiles à l'utilisateur d'une interface haptique - appelée également interface tactile ou écran tactile - pour simuler, notamment, l'appui d'une touche ou le ressenti d'une texture lorsque l'utilisateur est en contact physique avec l'interface haptique, par exemple lorsqu'il déplace son doigt sur la surface de contact de l'interface haptique. Il existe, dans l'état de l'art, plusieurs systèmes qui permettent de générer ces sensations tactiles. Ces systèmes comportent généralement plusieurs actionneurs fixés sur une dalle tactile de sorte à déplacer la dalle tactile par des petits déplacements rapides, générés en réponse à une action motrice de l'utilisateur. Ces systèmes, lorsqu'ils reproduisent suffisamment fidèlement les signaux mécaniques naturels, permettent à l'utilisateur de ressentir des sensations tactiles réalistes. Si l'utilisateur presse la surface de contact de la dalle tactile et que celle-ci répond à la pression par un bref déplacement, alors l'utilisateur a la sensation d'actionner un bouton. Si l'utilisateur glisse le doigt sur la surface de contact et que la dalle tactile répond par une oscillation rapide, alors l'utilisateur a la sensation de toucher une texture.

Toutefois, si ces systèmes permettent de produire une sensation tactile lorsqu'un doigt de l'utilisateur entre en contact avec la surface de contact de l'interface haptique, la sensation haptique n'est plus ressentie clairement dès lors que l'utilisateur a plusieurs doigts en contact avec la même surface de contact ou si plusieurs utilisateurs sont en contact avec la même surface de contact.

Or, certaines interfaces haptiques sont destinées à être utilisées avec plusieurs doigts, comme par exemple les interfaces des véhicules automobiles, ou à être partagées entre plusieurs utilisateurs, comme par exemple les interfaces collaboratives.

Pour répondre à ce besoin, un fabricant d'interfaces haptiques propose de diviser la dalle tactile de l'interface en plusieurs petites dalles mécaniquement distinctes et actionnées chacune par un actionneur distinct. Une telle interface est décrite dans la demande de brevet US 8 686 952. Cette interface comporte autant de zones tactilement distinctes que d'actionneurs. Or, plus le nombre d'actionneurs est élevé, plus le système est complexe à réaliser et à contrôler. Aussi, pour que l'utilisateur puisse ressentir des sensations tactiles différentes sur l'ensemble de la surface de contact de l'interface haptique, le nombre d'actionneurs doit être particulièrement élevé, ce qui complexifie grandement le système.

Un autre fabricant d'interfaces haptiques propose d'exploiter les phénomènes vibratoires des dalles tactiles pour générer des vibrations différentes mais simultanées en plusieurs zones de ladite dalle tactile. Un exemple d'une telle technique, décrite notamment dans la demande de brevet US 2015/0138157 A1, consiste à provoquer des interférences constructives et destructives dans des zones de la dalle tactile en excitant sélectivement certains modes de vibrations afin d'augmenter les vibrations dans certaines zones et de les réduire dans d'autres zones.

Une autre technique encore, basée sur l'exploitation des phénomènes vibratoires et décrite par exemple dans la demande de brevet US 9 436 284, consiste à utiliser le principe de retournement temporel pour refocaliser les ondes issues des réponse impulsionnelles mesurées en différents points de la dalle tactile. Le document US2017329408 A1 divulgue un dispositif tactile comprenant un panneau capable de supporter des ondes de flexion, un écran tactile accessible à l'utilisateur et ayant une pluralité de zones de détection différentes, une pluralité d'excitateurs de vibrations couplés au panneau pour appliquer des ondes de flexion au panneau afin de fournir une sensation tactile au niveau des zones de détection en réponse au contact de l'utilisateur avec une zone de détection, et des moyens de traitement du signal agencés pour appliquer des signaux aux excitateurs de vibration de façon à ce que l'amplitude des ondes de flexion appliquées est maximisée au niveau de la zone de détection touchée par l'utilisateur et réduite ou minimisée au niveau de chaque autre zone de détection, où elle peut être pratiquement nulle dans certains modes de réalisation.

Ces techniques exploitant les phénomènes vibratoires présentent de nombreux inconvénients comme, par exemple, de faibles amplitudes permissibles des vibrations dues aux ondes de flexion se propageant par déformation de la dalle tactile, la sensibilité aux conditions aux limites et notamment aux conditions d'encastrement des bordures de la dalle, la sensibilité aux conditions environnementales et notamment à la température de la dalle tactile, la nécessité

**EP 3 914 993 B1**

d'employer un nombre d'actionneurs important et de les piloter avec une grande précision fréquentielle et temporelle pour maîtriser les conditions d'interférence, et le manque d'efficacité énergétique inhérente aux excitations acoustiques.

**RESUME DE L'INVENTION**

Pour répondre aux différents problèmes évoqués ci-dessus, et notamment aux problèmes de mise en oeuvre des phénomènes vibratoires et aux problèmes de complexité du pilotage d'un grand nombre d'actionneurs, le demandeur propose une interface haptique nécessitant un nombre d'actionneurs restreint, pilotés de façon à générer des déplacements en tout point de la dalle tactile excepté en un point ou un ensemble de points neutres. L'interface haptique met en oeuvre un programme informatique permettant de calculer les efforts instantanés qui font pivoter une portion rigide de l'interface autour du point ou un ensemble de points neutres et qui donnent une accélération désirée à un autre point ou ensemble de points de la portion rigide.

Selon un premier aspect, l'invention concerne un procédé tel que défini par la revendication 1.

Ce procédé permet de générer des sensations tactiles, simultanément, en plusieurs emplacements de la portion rigide d'une dalle tactile.

Selon un second aspect, l'invention concerne une interface haptique mettant en oeuvre le procédé défini ci-dessus, telle que définie par la revendication 2.

Cette interface haptique permet à un utilisateur de recevoir des sensations tactiles différentes dans plusieurs doigts lorsqu'il utilise l'interface haptique, ou à plusieurs utilisateurs de recevoir chacun des sensations tactiles lorsqu'ils utilisent simultanément la même interface haptique.

Des modes de réalisation avantageux sont définis par les revendications dépendantes.

Selon un troisième aspect, l'invention concerne un dispositif électronique interactif, comportant une interface haptique telle que définie précédemment.

**BREVE DESCRIPTION DES FIGURES**

D'autres avantages et caractéristiques de l'invention apparaîtront à la lecture de la description, illustrée par les figures dans lesquelles :

La figure 1 représente schématiquement une vue de face d'une interface haptique selon l'invention avec un utilisateur en contact avec ladite interface ;
La figure 2 représente une vue de dessus schématique d'une interface haptique selon l'invention ;
La figure 3 représente une vue schématique de la portion rigide avec des actionneurs selon un mode de réalisation de l'invention ;
La figure 4 représente une vue schématique de la portion rigide avec des actionneurs selon un autre mode de réalisation de l'invention ; et
La figure 5 représente une vue schématique de la portion rigide avec des actionneurs selon encore un autre mode de réalisation de l'invention.

**DESCRIPTION DETAILLEE D'AU MOINS UN MODE DE REALISATION**

Un exemple d'une interface haptique, dans laquelle des déplacements sont générés sur l'ensemble de la dalle tactile excepté en un emplacement neutre, est décrit en détail ci-après, en référence aux dessins annexés. Cet exemple illustre les caractéristiques et avantages de l'invention. Il est toutefois rappelé que l'invention ne se limite pas à cet exemple.

Sur les figures, les éléments identiques sont repérés par des références identiques. Pour des questions de lisibilité des figures, les échelles de taille entre éléments représentés ne sont pas respectées.

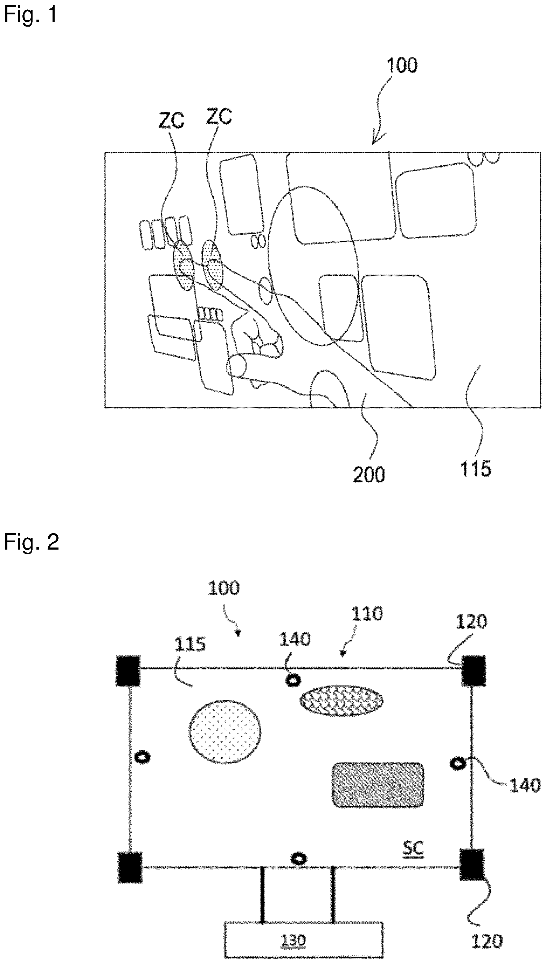

Les figures 1 et 2 représentent des exemples d'une interface haptique selon l'invention. Cette interface haptique 100 comporte :

- une dalle tactile 110 par laquelle l'utilisateur 200 peut interagir avec l'interface haptique,
- des actionneurs 120 qui permettent de générer un déplacement de la dalle tactile 110, et
- une unité de traitement 130 qui permet, notamment, de piloter les actionneurs 120.

La dalle tactile 110 comporte une portion rigide 115 avec laquelle l'utilisateur 200 est susceptible d'être tactilement en contact. La portion rigide 115 comporte une face, appelée surface de contact SC, qui est la face par laquelle l'utilisateur entre en contact avec la dalle tactile. La portion rigide 115 peut être une plaque rigide, par exemple réalisée dans un matériau transparent, de forme rectangulaire, comme représenté sur la figure 2. L'homme du métier comprendra que la portion rigide peut prendre d'autres formes que rectangulaires, comme par exemple circulaire, triangulaire ou trapézoïdale. La portion rigide 115 peut également prendre d'autres formes que celle d'une plaque. Elle peut être, par exemple, semi-sphérique avec une face plane et une face bombée. Elle peut être aussi une pièce de forme arbitraire, telle que possédant des surfaces gauches. Ces formes arbitraires rendront le calcul des efforts plus complexe que ceux qui sont détaillés ci-dessous pour le cas d'une plaque sans changer leur principe.

La dalle tactile 110 comporte en outre un dispositif de détection et de localisation qui détecte le contact - ou la proximité - de l'utilisateur et détermine les coordonnées et la taille de la zone de contact. Un tel dispositif de détection et de localisation est bien connu dans le domaine des dalles tactiles et ne sera donc pas décrit plus en détail.

Dans l'exemple de la figure 1, deux doigts de l'utilisateur 200 sont en contact, simultanément, avec deux zones distinctes ZC de la portion rigide 115 de l'interface haptique 100. Chaque zone ZC, appelée zone de contact, est une zone de la surface de contact SC de la portion rigide 115 avec laquelle l'utilisateur 200 est en contact physique. Dans l'exemple de la figure 1, l'utilisateur 200 est directement en contact tactile avec l'interface haptique 100 en touchant ou en appuyant avec ses doigts sur les zones de contact ZC de la surface de contact SC.

Dans des variantes, l'utilisateur 200 peut être en contact tactile avec l'interface haptique 100 au moyen d'un seul doigt, de plusieurs doigts ou d'une autre partie de son corps. Il peut également être en contact avec l'interface haptique 100 de façon indirecte, par l'intermédiaire d'un équipement adapté tel qu'un stylet ou un gant tactile. La suite de la description sera donnée pour l'exemple d'un premier et d'un deuxième doigt d'un utilisateur, étant entendu qu'il peut s'agir d'une autre partie du corps de l'utilisateur ou d'un équipement adapté. De même les exemples donnés en référence à des premier et deuxième doigts d'un utilisateur peuvent être étendus à plusieurs doigts ou points de contact d'un même utilisateur ou à un doigt ou point de contact d'un premier utilisateur et un doigt ou point de contact d'un deuxième utilisateur.

Que le contact tactile entre l'utilisateur 200 et la dalle tactile 110 soit un contact direct ou un contact indirect, la zone de la dalle tactile avec laquelle l'utilisateur est en contact est appelée point de contact. Ce point de contact peut être un unique point ou un ensemble de points contigus. Dans l'exemple de la figure 1, chaque zone de contact ZC constitue un point de contact.

Les actionneurs 120 entrainent la portion rigide 115 de la dalle tactile 110 et sont configurés pour appliquer de petits déplacements à ladite portion rigide soit dans une direction tangentielle soit dans une direction normale, comme expliqué ultérieurement. Les actionneurs 120 sont montés de façon à être solidaires de la portion rigide 115. Les actionneurs 120, au moins au nombre de deux, sont positionnés à distance l'un de l'autre. Ils peuvent, par exemple, être positionnés en diagonale l'un par rapport à l'autre lorsque la portion rigide 110 est de forme rectangulaire ou de façon diamétralement opposée si la portion rigide est circulaire. Lorsque les actionneurs 120 sont dans un nombre supérieur à deux, par exemple trois ou quatre, lesdits actionneurs sont répartis de façon plus ou moins régulière sur le pourtour de la portion rigide 115. Dans l'exemple de la figure 2, où la portion rigide 115 est rectangulaire, les actionneurs sont au nombre de quatre et sont positionnés chacun dans un angle de ladite portion rigide 115. L'homme du métier comprendra que plusieurs positions des actionneurs peuvent être envisagées par rapport à la portion rigide 115, dès lors que lesdits actionneurs sont suffisamment distants les uns des autres pour permettre de déplacer la portion rigide et de moduler ce déplacement.

Selon certains modes de réalisation, l'interface haptique comporte des moyens de suspension viscoélastique 140, comme représenté sur la figure 2, configurés pour permettre de petits déplacements, soit dans la direction normale, soit dans la direction tangentielle, et être suffisamment rigides dans les directions complémentaires. Ainsi, les moyens de suspension viscoélastique 140 sont adaptés pour autoriser des déplacements de la portion rigide 115 dans une direction prédéterminée et réduire ou supprimer les déplacements dans des directions autres que la direction prédéterminée. Ces moyens de suspension viscoélastique peuvent être liés, par exemple, à un bâti fixe de la dalle tactile 110. Les moyens de suspension viscoélastique 140 peuvent être, par exemple, des joints en matière caoutchouteuse et/ou en élastomère, alvéolés ou non, fixés par exemple au moyen d'une couche adhésive de sorte à relier la portion rigide au bâti de la dalle tactile. La dalle tactile est alors capable de procurer des sensations haptiques grâce à des petits déplacements autour d'une position moyenne.

L'unité de traitement 130 assure le traitement des données reçues du dispositif de détection et de localisation et pilote les actionneurs 120. L'unité de traitement met en oeuvre un programme informatique de coordination des actionneurs, configuré pour annuler le déplacement transitoire ou oscillant de la portion rigide autour du ou des points neutres et commander un signal mécanique d'amplitude prédéfinie à chaque actionneur 120. L'unité de traitement 130 met en oeuvre, en outre, un programme informatique de gestion des interactions pour que deux sensations différentes soient perçues différemment par deux utilisateurs ou deux doigts d'une même main.

L'interface haptique décrite ci-dessus met en oeuvre un procédé de génération de sensations tactiles. Ce procédé permet à l'utilisateur de ressentir des sensations tactiles à chaque point de contact de l'utilisateur avec la surface de contact SC de la portion rigide 115. Dans l'exemple de la figure 1, le procédé de l'invention permet à l'utilisateur 200 de ressentir des sensations haptiques dans chacun des deux doigts en contact avec la surface de contact SC, les sensations tactiles pouvant être différentes dans un doigt et dans l'autre. Dans d'autres exemples, non représentés sur les figures, plusieurs utilisateurs peuvent être en contact simultanément avec l'interface haptique, l'interface haptique étant alors apte à fournir des sensations tactiles à chacun des différents utilisateurs même lorsque ces derniers sont simultanément en contact avec ladite interface haptique.

Selon l'invention, les sensations tactiles sont générées par les actionneurs 120 commandés et pilotés par l'unité de traitement 130. Cette unité de traitement 130 met en oeuvre des programmes informatiques de commande et de pilotage des actionneurs 120 afin de provoquer des déplacements de la portion rigide sur toute ladite portion rigide excepté en un emplacement neutre. Cet emplacement neutre correspond à un endroit où l'interface haptique ne produit pas de sensations tactiles, comme par exemple l'endroit où un premier doigt de l'utilisateur est déjà en contact avec l'interface tactile. Cet emplacement neutre peut être un point ou un ensemble de points, comme par exemple un point et ses points alentours - appelé point neutre - ou des points alignés formant une ligne ou un segment de droite - appelés ligne neutre. En effet, le procédé de l'invention a pour dessein de générer un déplacement de la portion rigide offrant une sensation tactile à l'utilisateur en tous points de ladite portion rigide sauf à l'emplacement neutre, ledit emplacement neutre pouvant correspondre à un endroit de la portion rigide où l'utilisateur est déjà en contact avec l'interface haptique. Ainsi, un utilisateur ressent une première sensation tactile dans un premier doigt à l'instant où son premier doigt entre en contact avec l'interface haptique ; il ressent une deuxième sensation tactile dans son deuxième doigt au moment où son deuxième doigt entre en contact avec l'interface tactile, aucune sensation tactile n'étant alors plus ressentie par le premier doigt.

De façon plus précise, l'unité de traitement 130 met en oeuvre un programme informatique de coordination des actionneurs 120 configuré pour annuler le déplacement transitoire ou oscillant de la portion rigide autour d'un point neutre correspondant à la position du doigt à ne pas stimuler, dans le cas d'un actionnement tangentiel, ou autour d'une ligne dans le cas d'un actionnement normal. Le signal mécanique est alors supprimé en un lieu particulier de la portion rigide 115, appelé emplacement neutre (par exemple un point ou un ensemble de points neutres) lors de déplacements petits en regard des dimensions principales de la surface de la portion rigide. Tout autre doigt en contact avec la surface de contact SC de la portion rigide reçoit un signal mécanique dont l'amplitude s'accroît proportionnellement à la distance entre l'emplacement neutre (non stimulé) et le point de contact (à stimuler). L'unité de traitement 130 met en oeuvre, en outre, un programme informatique de gestion des interactions pour assurer que deux sensations différentes sont perçues par deux doigts d'une même main.

Le principe de superposition linéaire des signaux s'applique donc dans ce cas. Ceci rend possible en particulier de produire simultanément une sensation dans un seul doigt et une autre sensation dans un autre doigt, qu'elles soient transitoires ou persistantes, tel que décrit plus haut.

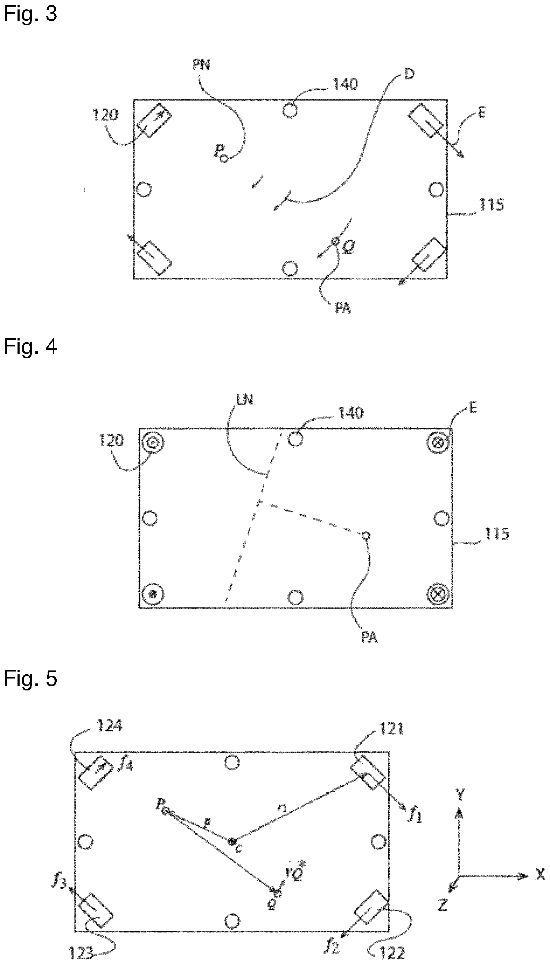

Deux exemples de dalles tactiles sont représentés sur les figures 3 et 4 avec des types de déplacements différents de la portion rigide 115. Dans l'exemple de la figure 3, les actionneurs 120 sont actionnés tangentiellement et assurent un déplacement de la portion rigide 115 autour d'un point neutre PN. Dans l'exemple de la figure 4, les actionneurs 120 sont actionnés suivant la normale à la portion rigide et assurent un déplacement de la portion rigide 115 autour d'une ligne neutre LN.

La dalle tactile selon l'exemple de la figure 3 comporte une portion rigide 115, en forme de plaque rectangulaire, mue par quatre actionneurs 120 et supportée par quatre moyens de suspension viscoélastique 140. Chaque actionneur 120 est monté solidaire de la portion rigide, dans un angle de ladite portion rigide. Chaque moyen de suspension viscoélastique 140 est monté entre deux actionneurs consécutifs. Dans le cas de la figure 3 et 4, des actionneurs de type électrodynamiques peuvent être avantageusement utilisés. De tels actionneurs comportent un circuit magnétique qui interagit avec une ou plusieurs bobines et peuvent adopter de très nombreuses configurations : planaires, radiales, axiales, etc. Un exemple bien connu est celui des moteurs de haut-parleurs qui ont une configuration radiale. Ces moteurs peuvent appliquer un effort sur la dalle tactile en prenant appui sur un socle ou en agissant sur une masselotte par application du principe de conservation du moment cinétique. Il est aussi possible d'employer des actionneurs de type piézoélectrique généralement associés à un dispositif d'amplification du mouvement. Les actionneurs piézoélectriques étant en général rigides ; ils présentent souvent l'inconvénient d'introduire des résonantes structurelles indésirables une fois couplés à une charge. Toutefois, dans le cas où la dalle tactile possèderait une très faible masse, alors leur utilisation pourrait être envisagée. Ces éléments sont configurés pour faciliter le déplacement de la portion rigide 115 dans son plan principal XY et la contraindre dans la direction Z orthogonale à ce plan. Les actionneurs sont configurés par paires opposées et sont orientés pour faciliter la rotation de la portion rigide autour d'un point du domaine de ladite portion rigide, les actionneurs d'une même paire étant commandés par des signaux en opposition de phase. Les actionneurs produisent chacun un effort E, pouvant être différent des efforts E des autres actionneurs, et orienté dans le plan XY de la portion rigide. L'intensité de chacun des efforts E est déterminée par l'unité de traitement 130 de sorte que l'action combinée desdits efforts E des différents actionneurs 120 permet d'annuler le déplacement au point neutre PN mais de produire un déplacement D en tout autre point de la portion rigide 115.

Si les signaux envoyés par l'unité de traitement 130 aux actionneurs sont brefs, par exemple entre 10 et 1000 millisecondes, les déplacements de la portion rigide 115 sont petits en proportion des dimensions de ladite portion rigide. Ces déplacements sont typiquement de l'ordre de 10 à 1000 micromètres. Si, par exemple, ces déplacements sont tous identiques, à la phase près, et agencés pour que les actionneurs situés sur chaque diagonale reçoivent des signaux en opposition de phase mais en phase sur le pourtour, alors la portion rigide 115 pivote autour du point neutre PN qui, dans ce cas, est au centre d'une plaque rectangulaire. Dans un cas plus général, les amplitudes réciproques de ces signaux permettent de situer le point neutre PN en n'importe quel lieu de la portion rigide, là où aucune sensation tactile ne doit être ressentie comme, par exemple, à l'emplacement où la position du premier doigt de l'utilisateur a été détectée. Un choix judicieux des amplitudes des efforts E provoque une accélération désirée en un point PA. Selon une variante, plus le point PA est proche du point neutre PN, plus l'accélération provoquant le déplacement D diminue et plus le point PA est éloigné du point neutre PN, plus l'accélération provoquant le déplacement D augmente.

Le même principe de commande peut être généralisé à des configurations différentes dans lesquelles, par exemple, le nombre d'actionneurs est de deux, trois ou supérieur à quatre. Ce même principe s'applique aussi bien à des actionneurs dont une armature est fixée à un bâti commun et dont l'autre armature est fixée à la portion rigide qu'aux actionneurs dont le mode de fonctionnement repose sur le principe de la conservation du moment cinétique. Dans ce dernier cas, les moyens de suspension sont fixés au bâti commun.

L'existence du point neutre PN est garantie par le Théorème de Chasles. Sa position dépend de l'action du torseur des efforts instantanés, auquel contribuent les efforts E, agissant sur le tenseur d'inertie de la portion rigide 115, éventuellement combiné à l'action de rappel élastique des moyens de suspension viscoélastique 140.

La dalle tactile 110 selon l'exemple de la figure 4 comporte une portion rigide 115, en forme de plaque rectangulaire, mue par quatre actionneurs 120 et supportée par quatre moyens de suspension viscoélastique 140. Chaque actionneur 120 est monté solidaire de la portion rigide, dans un angle de ladite portion rigide. Les actionneurs 120 peuvent être de tout type propre à générer un effort sur une bande passante suffisante pour générer des sensations tactiles. Un exemple d'un tel actionneur est un actionneur électrodynamique ou un actionneur piézoélectrique. Chaque moyen de suspension viscoélastique 140 est monté entre deux actionneurs consécutifs. Ces éléments sont configurés pour faciliter le déplacement de la portion rigide 115 hors de son plan principal XY. Les actionneurs 120 produisent chacun un effort E orienté dans la direction Z normale au plan XY de la portion rigide, chaque effort E pouvant être différent des efforts E des autres actionneurs. L'intensité de chaque effort E est déterminée par l'unité de traitement 130 et l'action combinée des efforts E permet d'annuler le déplacement de tous les points situés sur une ligne neutre LN, elle-même située dans le plan XY de la portion rigide 115.

Un choix judicieux des amplitudes des efforts E provoque une accélération désirée en des points situés dans les demi-plans XY de la portion rigide 115 situés de part et d'autre de la ligne neutre LN. Selon une variante, plus le point PA est proche de la ligne neutre LN, plus l'accélération provoquant le déplacement D diminue et plus le point PA est éloigné de la ligne neutre LN, plus l'accélération provoquant le déplacement D augmente.

Dans l'exemple de la figure 4, la dalle tactile 110 est configurée pour permettre des petits déplacements de la portion rigide hors du plan. Dans cet exemple, les moyens de suspension viscoélastique 140 sont aptes à contraindre les mouvements latéraux dans une plus grande mesure que dans la direction normale. Les actionneurs 120 sont aussi configurés pour provoquer des petits déplacements dans la direction Z normale au plan XY de la portion rigide 115. Bien que la configuration de la figure 4 soit susceptible d'exciter des modes de fréquences plus basses que dans la configuration de la figure 3, elle présente l'avantage de provoquer l'immobilisation d'une ligne LN de points neutres. Ainsi, si deux points sont détectés comme devant être des points neutres dont il faut éviter la stimulation, la ligne neutre LN peut passer par ces deux points et provoquer un champ de déplacement dans les deux demi-plans X-Y définis par la ligne LN.

L'existence de la ligne de pivotement LN est garantie par le Théorème de Chasles. Sa position dépend de l'action du torseur des efforts instantanés, auquel contribuent les efforts E, agissant sur le tenseur d'inertie de la portion rigide 115, éventuellement combiné à l'action de rappel élastique des moyens de suspension viscoélastique 140.

Ce qui vient d'être décrit pour les signaux transitoires s'applique également aux signaux qui persistent dans le temps, tels que des sommes de sinusoïdes. Dans tous les cas, il est possible de calculer efficacement, c'est-à-dire sous forme analytique, les amplitudes relatives des amplitudes des signaux de commande de façon à simultanément obtenir l'annulation du déplacement au point neutre PN et l'accélération désirée en un point PA, distinct du point neutre PN. Les calculs ci-dessous résolvent complètement le problème dynamique du cas de la figure 3. Les calculs nécessaires à la solution du cas de la figure 4 sont similaires à ceux qui sont donnés ci-dessous, à l'exception de l'expression de la contrainte d'annulation de l'accélération, et pourraient être déduits de ce qui précède par l'homme du métier.

Le point neutre PN et le point PA sont identifiés par les symboles, respectivement P et Q. La position du point neutre PN et l'accélération au point PA peuvent être déterminées en calculant les efforts instantanés $f_1$, $f_2$, $f_3$, $f_4$ produits respectivement par les actionneurs 121, 122, 123, 124 représentés sur la figure 5. En effet, lorsqu'une portion rigide se déplace dans le plan XY, si $v_C$ désigne la vitesse du centre de masse $C$ de ladite portion rigide, si $p$ est un vecteur reliant le centre de masse $C$ au point $P$, et si $\omega$ représente la vitesse angulaire autour d'un vecteur unitaire normal à la portion rigide alors, dans un repère absolu, la vitesse du point $P$ est selon la relation fondamentale de la cinématique (dite de Varignon),

$$\boldsymbol{v}_P = \boldsymbol{v}_C + \boldsymbol{b} \times \boldsymbol{\omega} \quad \text{(Eq1).}$$

Soient $N$ forces $f_i$, avec $i = 1,\cdots, N$, appliquées à la portion rigide, et soient $r_i$, avec $i = 1,\cdots, N$, les vecteurs reliant le centre de masse $C$, aux points d'application de ces forces. Si J est le moment d'inertie de la portion rigide autour d'un axe perpendiculaire au plan XY de la portion rigide passant par le centre de masse $C$ et si $M$ est la masse, alors les équations du mouvement sont :

$$M\,\dot{\boldsymbol{v}}_C = \sum_{i=1}^{N} \boldsymbol{f}_i \qquad \text{(Eq2)}$$

$$J\,\dot{\omega} = \sum_{i=1}^{N} \boldsymbol{r}_i \times \boldsymbol{f}_i \qquad \text{(Eq3).}$$

Dans le procédé, on veut imposer la contrainte, $v_P = 0$. Pour cela, l'équation (Eq1) donne :

$$\dot{\boldsymbol{v}}_C(t) = -(\boldsymbol{p} \times \dot{\boldsymbol{\omega}}(t)) \qquad \text{(Eq4),}$$

qui annule l'accélération du point $P$ tant que cette contrainte est respectée. Substituer la valeur de $v_C$ donnée par l'équation (Eq4) dans l'équation (Eq2) puis la valeur de $\dot{\omega}$ donnée par (Eq3) dans le résultat donne,

$$\frac{M}{J}\left(\boldsymbol{p} \times \sum_{i=1}^{N}(\boldsymbol{r}_i \times \boldsymbol{f}_i)\right) + \sum_{i=1}^{N} \boldsymbol{f}_i = 0 \qquad \text{(Eq5) .}$$

L'équation (Eq5) peut être mise sous forme scalaire, en substituant les vecteurs $f_i$ par $\|f_i\|n_i$, où les $\boldsymbol{n}_i = \begin{pmatrix} n_i^x & n_i^y \end{pmatrix}^{\mathrm{T}}$ sont des vecteurs unitaires indiquant les directions des forces et les $\|f_i\|$ sont leurs intensités. Les coordonnées des vecteurs $\boldsymbol{n}_i = \begin{pmatrix} n_i^x & n_i^y \end{pmatrix}^{\mathrm{T}}$ et des vecteurs $\boldsymbol{r}_i = \begin{pmatrix} r_i^x & r_i^y \end{pmatrix}^{\mathrm{T}}$ étant connues, l'équation (Eq5) se transforme en un système linéaire de deux équations à $N$ inconnues, $\|f_i\|$. Les intensités de force $\|f_i\|$ qui satisfont (Eq5) gardent le point P immobile. Pour que le point Q subisse une accélération désirée, $\dot{\boldsymbol{v}}_Q^*$, on impose une deuxième contrainte,

$$\frac{M}{J}\left(\boldsymbol{q} \times \sum_{i=1}^{N}(\boldsymbol{r}_i \times \boldsymbol{f}_i)\right) + \sum_{i=1}^{N} \boldsymbol{f}_i = M\dot{\boldsymbol{v}}_Q^* \qquad \text{(Eq6).}$$

Selon l'application, la contrainte (Eq6) peut être employée sous forme vectorielle ou sous forme scalaire en prenant le module des deux membres. La forme scalaire qui spécifie l'intensité de l'accélération mais non sa direction est moins contraignante que la forme vectorielle.

Dans le cas où on ne dispose que de deux actionneurs, il est clair, sauf cas particulier, que l'on ne peut satisfaire la contrainte de faire pivoter la plaque autour d'un point quelconque. Avec seulement deux actionneurs, la plaque pivotera autour d'un point dont les coordonnées ne peuvent être complètement spécifiées, ce qui peut être acceptable dans certaines applications, lorsque, par exemple, la plaque a un aspect très élancé. En effet, une fois les intensités mises en facteur, l'équation (Eq5) peut se mettre sous la forme :

$$A^{2\times 2} \begin{bmatrix} \|\boldsymbol{f}_1\| \\ \|\boldsymbol{f}_2\| \end{bmatrix} = \begin{bmatrix} 0 \\ 0 \end{bmatrix} \qquad \text{(Eq7)},$$

où $A^{2\times2}$ est une matrice de taille deux par deux. Il est donc possible d'exprimer une intensité en fonction de l'autre, ne laissant le choix que de leur rapport.

Dans le cas de trois actionneurs, la contrainte (Eq5) devient :

$$A^{2\times 3} \begin{bmatrix} \|\boldsymbol{f}_1\| \\ \|\boldsymbol{f}_2\| \\ \|\boldsymbol{f}_3\| \end{bmatrix} = \begin{bmatrix} 0 \\ 0 \end{bmatrix} \qquad \text{(Eq8)}.$$

Il est possible d'exprimer la famille de solution, une variété à une dimension, des efforts qui satisfasse l'équation (Eq8). Il s'agit d'une famille puisque l'intensité d'un petit déplacement résultant reste un paramètre libre. Tous calculs faits, cette famille s'exprime : [Math. 9] où

$$\begin{cases} \|\boldsymbol{f}_1\| = \left[ \dfrac{A_2(B_1 A_3 - A_1 B_3)}{A_1(A_2 B_1 - A_1 B_2)} - \dfrac{A_3}{A_1} \right] \|\boldsymbol{f}_3\| = C\|\boldsymbol{f}_3\|, \\[3mm] \|\boldsymbol{f}_2\| = \dfrac{B_1 A_3 - A_1 B_3}{A_1 B_2 - A_2 B_1} \|\boldsymbol{f}_3\| = D\|\boldsymbol{f}_3\|, \end{cases} \qquad \text{(Eq9)}$$

$$\begin{cases} A_i = \boldsymbol{n}_i^x + R K_i \boldsymbol{p}^x, \quad B_i = \boldsymbol{n}_i^y - R K_i \boldsymbol{p}^y, \\[2mm] K_i = \boldsymbol{r}_i^x \boldsymbol{n}_i^y - \boldsymbol{r}_i^y \boldsymbol{n}_i^x, \quad R = \dfrac{M\|\boldsymbol{p}\|}{J}, \\[2mm] E_i = \dfrac{\boldsymbol{n}^x}{M} + \dfrac{\|\boldsymbol{q}\|}{J} \boldsymbol{q}^y K_i, \quad G_i = \dfrac{\boldsymbol{n}^y}{M} - \dfrac{\|\boldsymbol{q}\|}{J} \boldsymbol{q}^x K_i, \\[2mm] C = \dfrac{A_2 L}{A_1 S} - \dfrac{A_3}{A_1}, \\[2mm] D = \dfrac{L}{-S} \quad \text{où} \quad L = A_3 B_1 - A_1 B_3 \quad \text{et} \quad S = A_2 B_1 - A_1 B_2 \end{cases} \qquad \text{(Eq10)}$$

De plus, si on pose l'équation

$$H = (E_3 + E_2 D + E_1 C)^2 + (G_3 + G_2 D + G_1 C)^2 \qquad \text{(Eq11)},$$

alors l'application de la contrainte (Eq6) donne, avec (Eq9), les intensités en fonction de l'accélération désirée du point Q :

$$\|\boldsymbol{f}_3\| = \pm \dfrac{\|\dot{\boldsymbol{v}}_Q\|}{\sqrt{H}} \qquad \text{(Eq12)}.$$

On peut donc s'assurer facilement que l'effort demandé aux actionneurs est réalisable.

On peut noter qu'il existe des configurations dites singulières où les dénominateurs s'annulent, par exemple quand les actionneurs sont symétriquement placés sur un triangle et que le point de pivotement est au centre. Dans ces cas, on trouve des solutions triviales.

Dans le cas où l'on dispose de quatre actionneurs, la contrainte (Eq5)

$$A^{2\times 4} \begin{bmatrix} \|\boldsymbol{f}_1\| \\ \|\boldsymbol{f}_2\| \\ \|\boldsymbol{f}_3\| \\ \|\boldsymbol{f}_4\| \end{bmatrix} = \begin{bmatrix} 0 \\ 0 \end{bmatrix} \qquad \text{(Eq13).}$$

Il est similairement possible, par substitution, d'exprimer la famille de solutions, qui est une variété à deux dimensions, pour les quatre efforts qui satisfasse l'équation (Eq13). Les expressions ne sont pas reproduites ici mais sont similaires au cas précédent.

Dans les cas pratiques, il faut parfois aussi tenir compte des forces élastiques dues à la déformation de la suspension viscoélastique 140 de la plaque. Pour cela, on écrit la condition d'équilibre statique au point Q. Soit, $d_Q$ , un petit déplacement du point Q , alors pour *N* actionneurs :

$$K_Q^{N\times 3} \begin{bmatrix} f_1^e \\ \vdots \\ f_N^e \end{bmatrix} = \begin{bmatrix} \boldsymbol{d}_Q^x \\ \boldsymbol{d}_Q^y \\ \theta \end{bmatrix} \qquad \text{(Eq14)}$$

où $K_Q$ est une matrice d'élasticité évaluée au point $Q$ et $f^e$ est le vecteur d'efforts demandé aux actionneurs pour vaincre les forces élastiques de rappel. Ceux-ci peuvent être calculés par intégration de l'accélération désirée au cours du temps afin de connaître les déplacements correspondants :

$$\boldsymbol{d}_Q(t) = \iint_0^t \dot{\boldsymbol{v}}_Q^*(\xi)d\xi, \quad \theta(t) = \iint_0^t \|\dot{\boldsymbol{\omega}}\|(\xi)d\xi \qquad \text{(Eq15)}$$

où $\|\dot{\boldsymbol{\omega}}\|$ est connu par l'équation (Eq3). Le système d'équations (Eq14) peut être résolu analytiquement par les méthodes ordinaires. Dans les cas où il y a moins de contraintes que d'efforts à déterminer, on peut choisir une solution optimale, par exemple au sens des moindres carrés :

$$\boldsymbol{f}^e = \begin{bmatrix} f_1^e \\ \vdots \\ f_N^e \end{bmatrix} = K_Q^+ \begin{bmatrix} \boldsymbol{d}_Q^x \\ \boldsymbol{d}_Q^y \\ \theta \end{bmatrix} \quad \text{ou} \quad K_Q^+ = (K_Q^T K_Q)^{-1} K_Q^T \qquad \text{(Eq16),}$$

où $K_Q^+$ est la pseudo inverse de Moore-Penrose de $K_Q$. La commande $f + f^e$ est appliquée aux actionneurs.

Ces calculs peuvent donc être effectués par des moyens de calcul de puissances modérées. De plus, les lois de la mécanique en jeu variant lentement en fonction des points de fonctionnement désirés, les déviations des solutions approximées des solutions exactes sont bornées. Il est donc possible de pré-calculer ces solutions et de les stocker dans une mémoire de taille limitée puis de restituer ces solutions en tous points de la portion rigide 115 à l'aide d'un faible nombre de multiplications et d'additions.

Le programme informatique mis en oeuvre par l'interface haptique 100 permet ainsi la gestion des stimulations multiples. Si, par exemple, l'interface haptique détecte la présence d'un premier doigt en un emplacement de la portion rigide 115 qui ne doit pas être stimulé (par exemple au point PN) et qu'un deuxième doigt est détecté en un emplacement qui doit être stimulé (par exemple PA), il est alors possible que des déplacements résiduels soient perceptibles par le premier doigt. Si une telle circonstance est détectée, alors l'unité de traitement 130 est apte à appliquer un signal de masquage de faible amplitude, par exemple du bruit blanc, à l'emplacement P0 du premier doigt pour effacer les déplacements résiduels. Si, par contre, la stimulation quasi-simultanées de deux doigts par deux stimuli différents est détectée (par exemple deux utilisateurs qui entrent presque simultanément en contact avec la portion rigide) alors cette précaution sera inutile dans une fenêtre temporelle prédéfinie de, par exemple quelques centaines de millisecondes.

Bien que décrit à travers un certain nombre d'exemples, variantes et modes de réalisation, l'interface haptique de l'invention et le procédé mis en oeuvre par ladite interface comprennent divers variantes, modifications et perfectionnements qui apparaîtront de façon évidente à l'homme du métier, étant entendu que ces variantes, modifications et perfectionnements font partie de l'invention, dont la portée n'est limitée que par ce qui est défini dans les revendications indépendantes.

## Revendications

1. Procédé de génération de sensations tactiles destinées à être ressenties par un utilisateur (200) en contact, en au moins un premier et un deuxième point de contact, avec une surface d'une portion rigide (115) d'une interface haptique (100), les premier et deuxième points de contact étant distincts l'un de l'autre, le procédé comportant :

   - une opération de détection et de localisation des premier et deuxième points de contact, et
   - une opération d'émission de signaux de commande pour commander simultanément au moins deux actionneurs (120) solidaires de la portion rigide et montés à distance l'un de l'autre, de sorte à provoquer un déplacement (D) de ladite portion rigide, les signaux de commande comportant chacun une amplitude déterminée de sorte que le déplacement s'annule en un emplacement neutre (PN, LN) prédéfini de la portion rigide de sorte que l'utilisateur perçoive une sensation tactile en tous points de la surface sauf à l'emplacement neutre (PN, LN), cet emplacement neutre étant un point neutre (PN), ou une ligne neutre (LN), comprenant l'un des premier ou deuxième points de contact.

2. Interface haptique (100) mettant en oeuvre le procédé selon la revendication 1, comportant :

   - une dalle tactile (110) comprenant :

      * une portion rigide (115) munie d'une surface de contact (SC), et
      * un dispositif de détection et de localisation d'au moins un premier et un deuxième points de contact entre au moins un utilisateur (200) et la surface de contact, les premier et deuxième points de contact étant distincts l'un de l'autre ;

   - au moins deux actionneurs (120) solidaires de la portion rigide, montés à distance l'un de l'autre et adaptés pour être actionnés simultanément afin de générer au moins un déplacement (D) de ladite portion rigide ; et
   - une unité de traitement (130) adaptée pour provoquer une annulation du déplacement en un emplacement neutre (PN, LN) de la portion rigide, cet emplacement neutre étant un point neutre (PN), ou une ligne neutre (LN), comprenant l'un des premier ou deuxième point de contact, de sorte que l'au moins un utilisateur perçoit une sensation tactile en tous points de la surface de contact (SC) sauf à l'emplacement neutre (PN, LN).

3. Interface haptique selon la revendication 2, **caractérisée en ce que** la portion rigide (115) est une plaque rigide.

4. Interface haptique selon l'une quelconque des revendications 2 à 3, **caractérisée en ce qu'**elle comporte des moyens de suspension viscoélastique (140) adaptés pour autoriser des déplacements de la portion rigide dans une direction prédéterminée et au moins réduire les déplacements dans des directions autres que la direction prédéterminée.

5. Interface haptique selon la revendication 4, **caractérisée en ce qu'**elle comporte un bâti et **en ce que** la portion rigide (115) est montée dans le bâti et reliée audit bâti par l'intermédiaire des moyens de suspension viscoélastique (140).

6. Interface haptique selon la revendication 5, **caractérisée en ce que** les moyens de suspension viscoélastique (140) comportent au moins un joint en matériaux caoutchouteux et/ou élastomères, au moins partiellement recouvert d'une couche adhésive.

7. Interface haptique selon l'une quelconque des revendications 2 à 6, **caractérisée en ce que** l'unité de traitement (130) est apte à piloter chaque actionneur (120) avec un signal d'amplitude différente.

8. Interface haptique selon la revendication 7, **caractérisée en ce que** l'unité de traitement est apte à déterminer l'amplitude du signal de commande de chaque actionneur (120) en fonction de la position du premier point de contact par rapport à l'emplacement du deuxième point de contact.

9. Interface haptique selon l'une quelconque des revendications 2 à 8, **caractérisée en ce que** les actionneurs (120) sont adaptés pour générer des efforts orientés dans des directions parallèles à un plan tangent à la surface de contact (SC) de sorte que l'emplacement neutre dans lequel le déplacement est annulé est un point neutre unique (PN).

10. interface haptique selon l'une quelconque des revendications 2 à 8, **caractérisée en ce que** les actionneurs (120) sont adaptés pour générer des efforts orientés dans une direction perpendiculaire à un plan tangent à la surface de contact (SC) de sorte que l'emplacement neutre dans lequel le déplacement est annulé est une ligne neutre (LN).

11. Interface haptique selon la revendication 9 ou 10, **caractérisée en ce que** les actionneurs (120) sont agencés par paires, les actionneurs d'une même paire étant commandés par des signaux en opposition de phase.

12. Interface haptique selon l'une quelconque des revendications 2 à 11, dans laquelle la dalle tactile (110) comporte un bâti supportant la portion rigide (115), **caractérisée en ce que** chaque actionneur (120) comporte une première armature fixée au bâti et une seconde armature fixée à la portion rigide.

13. Interface haptique selon l'une quelconque des revendications 2 à 11, **caractérisée en ce que** chaque actionneur (120) est un actionneur de type à conservation du moment cinétique.

14. Interface haptique selon l'une quelconque des revendications 2 à 13, **caractérisée en ce que** l'unité de traitement (130) est apte à commander un signal de masquage si un déplacement résiduel est détecté à l'emplacement neutre (PN, LN).

15. Dispositif électronique interactif, **caractérisé en ce qu'**il comporte une interface haptique (100) selon l'une quelconque des revendications 2 à 14.

**Patentansprüche**

1. Verfahren zur Erzeugung von taktilen Wahrnehmungen, die dazu bestimmt sind, von einem Benutzer (200) empfunden zu werden, der an mindestens einem ersten und einem zweiten Kontaktpunkt eine Oberfläche eines starren Abschnitts (115) einer haptischen Schnittstelle (100) berührt, wobei der erste und der zweite Kontaktpunkt voneinander verschieden sind und das Verfahren Folgendes umfasst:

   - einen Vorgang zum Erkennen und Lokalisieren des ersten und zweiten Kontaktpunkts und
   - einen Vorgang des Sendens von Steuersignalen, um gleichzeitig mindestens zwei Stellglieder (120) zu steuern, die mit dem starren Abschnitt fest verbunden und in einem Abstand voneinander montiert sind, so dass eine Verschiebung (D) des starren Abschnitts hervorgerufen wird, wobei die Steuersignale jeweils eine bestimmte Amplitude umfassen, so dass sich die Verschiebung an einer vordefinierten neutralen Stelle (PN, LN) des starren Abschnitts aufhebt, so dass der Benutzer an allen Punkten der Oberfläche außer an der neutralen Stelle (PN, LN) eine taktile Wahrnehmung empfindet, wobei diese neutrale Stelle ein neutraler Punkt (PN) oder eine neutrale Linie (LN) ist, die einen der ersten oder zweiten Kontaktpunkte umfasst.

2. Haptische Schnittstelle (100), die das Verfahren nach Anspruch 1 implementiert, mit:

   - einem Touchscreen (110) mit:

      *einem starren Abschnitt (115), der mit einer Kontaktfläche (SC) versehen ist, und
      *einer Vorrichtung zum Erkennen und Lokalisieren von mindestens einem ersten und einem zweiten Kontaktpunkt zwischen mindestens einem Benutzer (200) und der Kontaktfläche, wobei der erste und der zweite Kontaktpunkt voneinander verschieden sind;

   - mindestens zwei Stellgliedern (120), die fest mit dem starren Abschnitt verbunden sind, in einem Abstand zueinander montiert und so beschaffen sind, dass sie gleichzeitig betätigt werden können, um mindestens eine Verschiebung (D) des starren Abschnitts zu erzeugen; und

- eine Verarbeitungseinheit (130), die so beschaffen ist, dass sie eine Aufhebung der Bewegung an einer neutralen Stelle (PN, LN) des starren Abschnitts bewirkt, wobei diese neutrale Stelle ein neutraler Punkt (PN) oder eine neutrale Linie (LN) ist, die einen der ersten oder zweiten Kontaktpunkte umfasst, so dass der mindestens eine Benutzer an allen Punkten der Kontaktfläche (SC) außer an der neutralen Stelle (PN, LN) eine taktile Wahrnehmung empfindet.

3. Haptische Schnittstelle nach Anspruch 2, **dadurch gekennzeichnet, dass** der starre Abschnitt (115) eine starre Platte ist.

4. Haptische Schnittstelle nach einem der Ansprüche 2 bis 3, **dadurch gekennzeichnet, dass** sie viskoelastische Aufhängungsmittel (140) umfasst, die so beschaffen sind, dass sie Verschiebungen des starren Abschnitts in einer vorbestimmten Richtung zulassen und Verschiebungen in andere Richtungen als der vorbestimmten Richtung zumindest reduzieren.

5. Haptische Schnittstelle nach Anspruch 4, **dadurch gekennzeichnet, dass** sie einen Rahmen umfasst und dass der starre Abschnitt (115) in dem Rahmen montiert und mit dem Rahmen über die viskoelastischen Aufhängungsmittel (140) verbunden ist.

6. Haptische Schnittstelle nach Anspruch 5, **dadurch gekennzeichnet, dass** die viskoelastischen Aufhängungsmittel (140) mindestens eine Dichtung aus gummiartigen und/oder elastomeren Materialien umfassen, die zumindest teilweise mit einer Klebeschicht bedeckt ist.

7. Haptische Schnittstelle nach einem der Ansprüche 2 bis 6, **dadurch gekennzeichnet, dass** die Verarbeitungseinheit (130) geeignet ist, jedes Stellglied (120) mit einem Signal unterschiedlicher Amplitude anzusteuern.

8. Haptische Schnittstelle nach Anspruch 7, **dadurch gekennzeichnet, dass** die Verarbeitungseinheit in der Lage ist, die Amplitude des Steuersignals für jedes Stellglied (120) in Abhängigkeit von der Position des ersten Kontaktpunkts in Bezug auf die Position des zweiten Kontaktpunkts zu bestimmen.

9. Haptische Schnittstelle nach einem der Ansprüche 2 bis 8, **dadurch gekennzeichnet, dass** die Stellglieder (120) so ausgelegt sind, dass sie Kräfte erzeugen, die in parallele Richtungen zu einer Tangentialebene auf der Kontaktfläche (SC) gerichtet sind, so dass die neutrale Stelle, an der die Verschiebung aufgehoben wird, ein einzelner neutraler Punkt (PN) ist.

10. Haptische Schnittstelle nach einem der Ansprüche 2 bis 8, **dadurch gekennzeichnet, dass** die Stellglieder (120) so ausgelegt sind, dass sie Kräfte erzeugen, die in einer senkrechten Richtung zu einer Tangentialebene auf der Kontaktfläche (SC) ausgerichtet sind, so dass die neutrale Stelle, an der die Verschiebung aufgehoben wird, eine neutrale Linie (LN) ist.

11. Haptische Schnittstelle nach Anspruch 9 oder 10, **dadurch gekennzeichnet, dass** die Stellglieder (120) paarweise angeordnet sind, wobei die Stellglieder eines Paares durch gegenphasige Signale gesteuert werden.

12. Haptische Schnittstelle nach einem der Ansprüche 2 bis 11, in der der Touchscreen (110) einen Rahmen aufweist, der den starren Abschnitt (115) trägt, **dadurch gekennzeichnet, dass** jedes Stellglied (120) einen ersten Anker, der an dem Rahmen befestigt ist, und einen zweiten Anker, der an dem starren Abschnitt befestigt ist, aufweist.

13. Haptische Schnittstelle nach einem der Ansprüche 2 bis 11, **dadurch gekennzeichnet, dass** jedes Stellglied (120) das kinetische Moment erhält.

14. Haptische Schnittstelle nach einem der Ansprüche 2 bis 13, **dadurch gekennzeichnet, dass** die Verarbeitungseinheit (130) geeignet ist, ein Maskierungssignal zu steuern, wenn eine Restverschiebung an der neutralen Stelle (PN, LN) erkannt wird.

15. Interaktive elektronische Vorrichtung, **dadurch gekennzeichnet, dass** sie eine haptische Schnittstelle (100) nach einem der Ansprüche 2 bis 14 aufweist.

**EP 3 914 993 B1**

**Claims**

1. A method for generating tactile sensations intended to be felt by a user (200) in contact, at at least a first and a second contact point, with a surface of a rigid portion (115) of a haptic interface (100), the first and second contact points being distinct from one another, the method including:

   - an operation of detecting and locating the first and second contact points, and
   - an operation of emitting control signals for simultaneously controlling at least two actuators (120) integral with the rigid portion and mounted at a distance from each other, so as to cause a displacement (D) of said rigid portion, the control signals each including an amplitude determined so that the displacement cancels out at a predefined neutral location (PN, LN) of the rigid portion so that the user perceives a tactile sensation at all points of the surface except at the neutral location (PN, LN), this neutral location being a neutral point (PN), or a neutral line (LN), comprising one of the first or second contact points.

2. A haptic interface (100) implementing the method according to claim 1, including:

   - a touch panel (110) comprising:

     *a rigid portion (115) provided with a contact surface (SC), and
     *a device for detecting and locating at least a first and a second contact point between at least one user (200) and the contact surface, the first and second contact points being distinct from one another;

   - at least two actuators (120) integral with the rigid portion, mounted at a distance from each other and adapted to be simultaneously actuated in order to generate at least one displacement (D) of said rigid portion; and
   - a processing unit (130) adapted to cause cancellation of the displacement at a neutral location (PN, LN) of the rigid portion, this neutral location being a neutral point (PN), or a neutral line (LN), comprising one of the first or second contact points, such that the at least one user perceives a tactile sensation at all points of the contact surface (SC) except at the neutral location (PN, LN).

3. The haptic interface according to claim 2, **characterised in that** the rigid portion (115) is a rigid plate.

4. The haptic interface according to any of claims 2 to 3, **characterised in that** it includes viscoelastic suspension means (140) adapted to allow displacements of the rigid portion in a predetermined direction and at least to reduce displacements in directions other than the predetermined direction.

5. The haptic interface according to claim 4, **characterised in that** it comprises a frame and **in that** the rigid portion (115) is mounted in the frame and connected to said frame by means of the viscoelastic suspension means (140).

6. The haptic interface according to claim 5, **characterised in that** the viscoelastic suspension means (140) include at least one seal of rubbery and/or elastomeric materials, at least partially covered with an adhesive layer.

7. The haptic interface according to any of claims 2 to 6, **characterised in that** the processing unit (130) is able to drive each actuator (120) with a signal of different amplitude.

8. The haptic interface according to claim 7, **characterised in that** the processing unit is able to determine amplitude of the control signal for each actuator (120) as a function of the position of the first contact point relative to the location of the second contact point.

9. The haptic interface according to any of claims 2 to 8, **characterised in that** the actuators (120) are adapted to generate forces oriented in directions parallel to a plane tangent to the contact surface (SC) such that the neutral location in which displacement is cancelled is a single neutral point (PN).

10. A haptic interface according to any of claims 2 to 8, **characterised in that** the actuators (120) are adapted to generate forces oriented in a direction perpendicular to a plane tangent to the contact surface (SC) so that the neutral location in which the displacement is cancelled is a neutral line (LN).

11. The haptic interface according to claim 9 or 10, **characterised in that** the actuators (120) are arranged in pairs, the actuators of a same pair being controlled by signals in opposite phase.

**12.** The haptic interface according to any of claims 2 to 11, wherein the touch panel (110) includes a frame supporting the rigid portion (115), **characterised in that** each actuator (120) includes a first armature attached to the frame and a second armature attached to the rigid portion.

**13.** The haptic interface according to any of claims 2 to 11, **characterised in that** each actuator (120) is an actuator of the conservation of angular momentum type.

**14.** The haptic interface according to any of claims 2 to 13, **characterised in that** the processing unit (130) is able to control a masking signal if a residual displacement is detected at the neutral location (PN, LN).

**15.** An interactive electronic device, **characterised in that** it includes a haptic interface (100) according to any of claims 2 to 14.

Fig. 1

Fig. 2

Fig. 3

Fig. 4

Fig. 5

## RÉFÉRENCES CITÉES DANS LA DESCRIPTION

### Documents brevets cités dans la description

- US 8686952 B
- US 20150138157 A1
- US 9436284 B
- US 2017329408 A1